# EUROPÄISCHE PATENTSCHRIFT

(11) **EP 0 412 510 B1**
(45) Veröffentlichungstag und Bekanntmachung des Hinweises auf die Patenterteilung: **26.04.1995**
(21) Anmeldenummer: 90115178.7
(22) Anmeldetag: 07.08.1990
(51) Int. Cl.: C23C 4/18

(54) **Verfahren und Vorrichtung zum automatischen Einschmelzen von thermisch gespritzten Oberflächen**
Process and apparatus for the automatic melting of thermally sprayed surfaces
Procédé et dispositif pour la fusion automatique de surfaces pulvérisés thermiquement

(30) Priorität: 10.08.1989 DE 3926420; 02.08.1990 DE 4024586
(43) Veröffentlichungstag der Anmeldung: 13.02.1991
(73) Patentinhaber: Linde Aktiengesellschaft, 65189 Wiesbaden (DE)
(72) Erfinder: Stocker, Johann, Dipl.-Ing. (FH), D-8031 Gilching (DE); Niederberger, Karl, Dipl.-Ing., D-8000 München 90 (DE); Heinrich, Peter, Dipl.-Ing. (FH), D-8034 Germering (DE)
(74) Vertreter: Schaefer, Gerhard, Dr.

(56) Entgegenhaltungen:
- CH-C- 674 650
- DE-A- 3 715 327
- GB-A- 2 210 064
- PATENT ABSTRACTS OF JAPAN, Band 8, Nr. 138 (C-231)[1575], 27. Juni 1984; & JP-A-59 47 369
- PATENT ABSTRACTS OF JAPAN, vol. 11, no. 141 (C-421)[2588], 8. Mai 1987; & JP-A-61 281 862
- Römpps Chemie-Lexikon, 8. Aufl. (1987), Franckh'sche Verlagshandlung, Stuttgart, DE, S. 3423 - 3424

## Beschreibung

Die Erfindung betrifft ein Verfahren und eine Vorrichtung zum automatischen Einschmelzen einer thermisch gespritzten Oberfläche auf einem zwar rotationssymmetrischen aber nicht zylinderischen Werkstück, bei dem das Werkstück um die Achse seiner Rotationssymmetrie in Rotation versetzt wird und bei dem auf dem Werkstück und auf dem Mantelflächenring, der gerade dem Einschmelzprozeß mit einem darauf gerichteten Einschmelzbrenner unterworfen ist, mit einer berührungslosen Sensorik die Temperatur oder die erhöhte Relexionsfähigkeit (nasser Schein) als für den Einschmelzvorgang relevante Größe gemessen wird,
wobei ausgehend von diesem Meßwert eine Vorschubbewegung des Einschmelzbrenners auf einer Brennerführungsbahn geregelt ausgeführt wird.

Bei thermisch aufgespritzten Oberflächen gibt es teilweise die Möglichkeit, durch einen nachfolgenden Arbeitsgang, dem sogenannten Einschmelzen, die aufgebrachten Schichten in ihren Eigenschaften zu verbessern oder zu verändern. Dieser Arbeitsgang besteht darin, daß das sogenannte selbstfließende Material, das aus selbstfließenden Spritzpulvern besteht, über seine Solidus-Temperatur bis zum Einschmelzen erwärmt wird. Dieser Vorgang bewirkt durch eine metallurgische Reaktion eine stoffschlüssige Bindung zwischen Spritzmaterial und Grundstoff, ähnlich dem Hartlöten. Die so entstehenden Schichten sind homogen, gas- und flüssigkeitsdicht. Die benötigte Arbeitstemperatur bewegt sich dabei, je nach verwendetem Material, zwischen 1020 und 1200 °C.

Zum Einschmelzen sind - neben einem aus der JP-A 59-47369 (s. insbes. Patent Abstracts of JP, Juni 1994) bekannten, automatisch ablaufenden Einschmelzverfahren, bei dem die Temperatur der wiedererschmolzene Oberfläche kontinuierlich gemessen und davon abhängend die Bewegungsgeschwindigkeit der Hitzequelle über die Oberfläche geregelt wird, im wesentlichen zwei weitere und ältere Verfahren bekannt:

Zum einen ist die Durchführung des Einschmelzens im wesentlichen auf manueller Basis bekannt, d.h. alle Handhabungen, Prozeßführung und Prozeßüberwachung werden vom Einschmelzer durchgeführt. Der sogenannte "nasse Schein" - ein Phänomen, das ab einer bestimmten Erwärmungstemperatur der aufgespritzten Schicht auftritt und den Eindruck eines nassen Werkstücks entstehen läßt - ist dabei der Ausgangspunkt, der eine Beurteilung des Einschmelzvorgangs zuläßt. Dabei ist jedoch eine erhebliche Belastung des Einschmelzpersonals hinsichtlich der Hitze und des erforderlichen hohen Aufmerksamkeitsgrades gegeben.

Zum zweiten werden mechanisierte Verfahren durchgeführt, die darauf beruhen, daß vom Einschmelzer vorher Verfahrensparameter (Vorschub-Geschwindigkeit, Abstand des Einschmelzbrenners, etc.) bestimmt werden und diese auf einer Einschmelzanlage für eine bestimmte Werkstückart fest eingestellt werden, bevor die Einschmelzanlage dann den Einschmelzvorgang zwar automatisch jedoch ohne irgend eine Art individueller Kontrolle des gerade ablaufenden Einschmelzprozesses durchführt. Dazu ist wiederum der Einschmelzer notwendig.

Bei dem eben beschriebenen, automatisierten Einschmelz-Verfahren ebenso wie bei dem oben beschriebenen, geregelt automatisierten Verfahren wird von sehr einfach ausgebildeten, ebenen oder zylindrischen Werkstücken ausgegangen, und es wird die gegenseitige Orientierung von Einschmelzbrenner und Werkstück- bis auf den geradlinigen Vorschub - beim Einschmelzvorgang unverändert belassen.

Bei nicht ebenen oder nicht zylindrischen Werkstücken ergibt sich jedoch aufgrund der variierenden Werkstück oberflächen eine neue Problemlage hinsichtlich der Automatisierung zugehöriger Einschmelzprozesse, da sich in diesem Fall die Abstandsverhältnisse beim geradlinigen Überfahren der Werkstücke mit dem Einschmelzbrenner automatisch verändern.

Die Aufgabenstellung der vorliegenden Erfindung besteht nun darin, ein möglichst vorteilhaftes Verfahren zum automatischen Einschmelzen von thermisch gespritzten Oberflächenschichten auf zwar rotationssymmetrischen aber nicht zylinderförmigen Werkstücken anzugeben.

Diese Aufgabe wird erfindungsgemäß mit den im Anspruch 1 angegeben Maßnahmen gelöst.

Dies ist eine Vorgehensweise, die einen vorteilhaft automatisierten Einschmelzablauf ergibt, wobei die dafür notwendigen Elemente angegeben sind und wobei sich ein in jedem Fall individuell geregelter Einschmelzprozeß ergibt.

Als geeignet und vorteilhaft wird dabei als für den Einschmelzvorgang relevante Größe die Temperatur im Einschmelzbereich(-gebiet) mittels eines Pyrometers, also mittels eines berührungslosen Temperaturmeßgeräts, gemessen.

Eine ebenso vorteilhafte Alternative besteht darin, daß als für den Einschmelzvorgang relevante Größe die erhöhte Reflexionsfähigkeit des gerade bearbeiteten Oberflächengebiets, der sogenannte nasse Schein, mittels eines Reflexionslichtdetektors gemessen wird.

Mit Vorteil wird zur Verfahrensdurchführung mit einem Pyrometer mit der Zieloptik desselben ein Bereich innerhalb der Einschmelzzone aus einem Abstand größer 30 cm anvisiert, wobei das Pyrometer auf einen bezüglich des Einschmelzens geeigneten Temperaturbereich kalibriert sein muß, und wobei fakultativ ein das Pyrometer gegen Hitze abschirmender Schild angeordnet werden kann.

Kommt als Sensorik ein Reflexionslichttaster zur Anwendung, so wird der Reflexionslichtdetektor einerseits mit Vorteil in senkrechter Einstellung über der zu messenden Fläche angeordnet, woraus folgt, daß nach dem Reflexionsgesetz reflektiertes Licht in den Detektor zurückfällt, wodurch in Verbindung mit dem Aufkommen des nassen Scheins und dem daraus erhaltenen Steuersignal der Vorschub geregelt wird.

Andererseits kann der Reflexionslichtsensor auch in der Weise zum Einsatz kommen, daß dieser etwas schräg über der zu messenden Fläche angeordnet wird, woraus folgt, daß zunächst bei matter Oberfläche diffus reflektiertes Licht in den Lichtdetektor fällt und bei Aufkommen des nassen Scheins dieses diffus reflektierte Licht abnimmt, wodurch mit dem daraus erhaltenen Steuersignal der Vorschub geregelt wird.

Bei der erfindungsgemäßen Verfahrensausführung wird der Brenner so geführt, daß der Abstand Werkstück - Brenner konstant bleibt. Auf diese Weise werden alle Oberflächengebiete der nicht zylinderischen Werkstücke in gleichartiger Weise mit der Brennerflamme und thermischer Energie beaufschlagt.

In einer weiteren, verfeinerten Ausgestaltung wird die Geschwindigkeit der Bearbeitungsbewegung, also die Rotationsgeschwindigkeit, in Abhängigkeit von der Werkstückform verändert und zwar derart, daß sich eine gleichbleibende Überstreichgeschwindigkeit für jeden Werkstückteil mit der Flamme ergibt.

Mit Vorteil wird für das erfindungsgemäße Einschmelzen als Einschmelzbrenner ein Brennstoff-Sauerstoff-Brenner, vorzugsweise Acetylen-Sauerstoff-Brenner, verwendet. Vor allem im Acetylen-Sauerstoff-Betrieb ergibt sich so die Möglichkeit, eine von neutral bis reduzierend wirkende Flamme mit gleichzeitig hoher Wärmeleistung einzustellen, um so beispielsweise durch eine reduzierende Flamme eine oxydfreie Oberfläche in der Einschmelzphase zu erhalten.

In einer weiteren vorteilhaften Weiterbildung wird der Brenner mit einer Gasmengenregelung ausgestattet, die gegebenenfalls in Abhängigkeit von der vorhandenen Werkstückgeometrie, der Werkstücktemperatur oder dem Einschmelzzustand geregelt werden kann.

Ein Brenner, der mit einer Brenner- und einer Flammenüberwachung ausgestattet ist, und also hinsichtlich Gaszufuhr, Temperatur und Flamme überwacht wird, ermöglicht die Integration sicherheitstechnischer Elemente, wie z.B. eine automatische Abschaltung bei Fehlfunktion des Brenners.

Eine Einschmelzvorrichtung zur Durchführung des erfindungsgemäßen Verfahrens für rotationssymmetrische Werkstücke besitzt die Merkmale gemäß Anspruch 8.

Der Schlitten ist - in einer Variante - quer zur Vorschubrichtung verschiebbar ausgebildet, weil damit der zusätzliche Bewegungsfreiheitsgrad für den Brenner und die Sensorik gewonnen wird, der bei den nicht zylinderförmigen Werkstücken die Nachführbarkeit dieser Elemente bezüglich der Werkstückoberfläche herstellt.

Als Alternative ist auch eine Ausgestaltung der Einschmelzvorrichtung derart möglich, daß der Einschmelzbrenner in seiner Halterung vorwärts und rückwärts verschiebbar ist. Zudem kann seine Flammrichtung von der 90°-Ausrichtung bezüglich der Werkzeugachse abweichend und bevorzugt etwas stechend eingestellt sein. Mit einer Vorwärts- oder Rückwärts - einstellung kann auch der Bereich auf dem Werkstück, der mit der Flamme beaufschlagt wird, etwas verschoben werden, was zu einer günstigeren Auslegung des Einschmelzvorgangs führen kann. Dies kann z.B. dazu dienen, daß ein Hitzenachlauf vermieden wird, der von der Sensorik nicht mehr erfaßt werden kann.

Dadurch, daß im Bereich unterhalb und seitlich des eingespannten Werkstücks Abschirmflächen gegen Hitze angeordnet sind, läßt sich die (vom Brenner ausgehende) Wärmebelastung der gesamten Anlage senken.

Anhand schematischer Zeichnungen soll im folgenden die Erfindung beispielhaft näher erläutert werden.

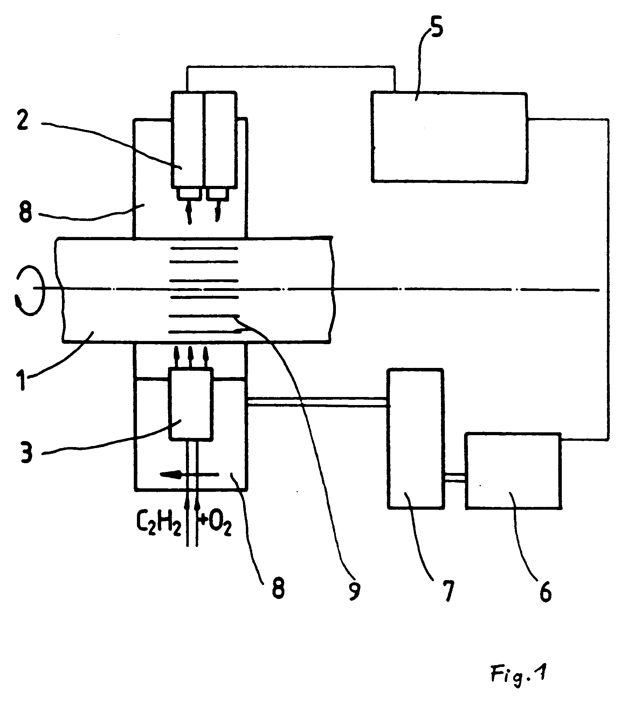

Figur 1 zeigt eine im Prinzip bekannte Anordung zum Einschmelzen einer thermisch gespritzten Oberfläche auf einer zylinderischen Welle 1. Über der Mantelfläche des Werkstücks 1 auf gleicher Höhe sind einander gegenüberliegend, hier also um 180° versetzt, ein Reflexionslichtdetektor 2 und ein Einschmelzbrenner 3 mit seiner Brenngas- und Sauerstoffgas-Versorgung (z.B. Acetylen und Sauerstoff) angeordnet. Der Reflexionslichtdetektor 2 ist mit einer Steuereinheit 5 verbunden, die das Ausgangssignal des Reflexionslichtdetektors 2 verarbeitet. Diese wiederum ist mit dem Vorschubmotor 6 verknüpft, der über ein Getriebe 7 den Vorschubschlitten 8 antreibt. Sowohl der Einschmelzbrenner 3 als auch der Reflexionslichtdetektor 2 sind auf dem Vorschubschlitten 8 montiert. Mit den Strichen 9 ist die Zone angedeutet, in der der nasse Schein auftritt.

Zur Durchführung des Einschmelzens im gezeigten, vorbekannten Fall wird das Werkstück 1 in Rotation versetzt und der Einschmelzbrenner 3 in Betrieb genommen. Der unterhalb der Wirkrichtung des Brenners 3 liegende Mantelflächenring wird somit erwärmt, wodurch nach Erreichen einer entsprechenden Temperatur (etwas über 1000 °C) die Erscheinung des nassen Scheins auftritt. Beim auf der gegenüberliegenden Seite der Welle 1 senkrecht über der Wellenoberfläche angeordneten Reflexionslichtdetektor 2 wird dann die Zunahme des reflektierten Lichts registriert, in ein entsprechendes Signal umgewandelt und an die Steuereinheit 5 weitergeleitet. Diese löst, entsprechend ihrer Programmierung, das Einschalten des Vorschubmotors ab einem bestimmten Signalwert und mit einer bestimmten Grundgeschwindigkeit aus, wobei diese wesentlich von der Werkstückgröße abhängig ist (etwa 4 bis 20 cm/min bei einem Werkstückdurchmesser von ca. 6 cm). Somit wird über das Getriebe 7 der Vorschubschlitten 8 in Bewegung gesetzt und der Brenner 3 und Reflexionslichtdetektor 2 werden gemeinsam entlang der zu bearbeitenden Oberfläche verschoben. Mittels des Reflexionslichtdetektors 2 wird dabei ständig überwacht, ob eine geeignete Werkstücktemperatur erreicht wird, da diese mit der Erscheinung des nassen Scheins verbunden ist. Nimmt die Menge an reflektiertem Licht ab, so sorgt die Steuereinheit für eine Verminderung der Vorschubgeschwindigkeit.

In einer anderen Programmierungs-Variante wird z.B. bei Erreichen des nassen Scheins ein Vorschubschritt ausgelöst, der im wesentlichen der Breite entspricht, die von der Brennerflamme auf einmal beaufschlagt wird.

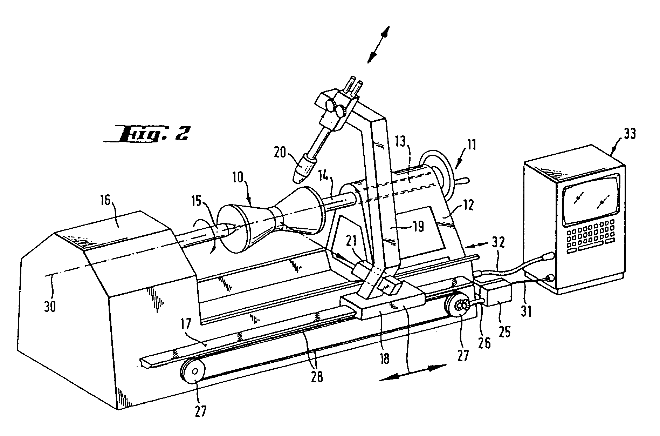

In Figur 2 ist nun eine erfindungsgemäße Einschmelzvorrichtung im Gesamtaufbau gezeigt. Ein zwar rotationssymmetrisches, aber nicht zylindrisches, längsmittig sich verjüngendes Werkstück 10 ist mittels einer Einspannvorrichtung 11, bestehend aus einem Einspannschlitten 12, einer Arretierspindel 13 mit Einspanndorn 14 und Gegendorn 15 eingespannt. Durch die Einspannkraft kann das Werkstück über den Gegendorn 15 mit einem regelbaren, in dem Gehäuse 16 untergebrachten Antrieb in Rotation versetzt werden. Parallel zur Drehachse und tiefer liegend dazu ist eine Schiene 17 angeordnet, auf der sich ein Schlitten 18 mit einem darauf aufgebauten Haltearm 19 befindet. Am Haltearm 19 ist sowohl ein Einschmelzbrenner 20 als auch ein zur berührungslosen Messung der Oberflächentemperatur dienendes Pyrometer 21 befestigt, wobei diese beiden Komponenten um etwa 90 ° versetzt auf die Mantelfläche des rotationssymmetrischen Werkstücks ausgerichtet sind. Ein Motor 25 sorgt in Verbindung mit einer Antriebsachse 26, Rollen 27 und Keilriemen 28 für die Bewegung des Haltearms 19 parallel zur Rotationsachse 30. Über die Verbindungsleitung 31 zwischen Vorschubmotor 25 und einer zentralen Rechen- und Steuereinheit 33 sowie über weitere Signalleitungen 32 werden alle wesentlichen Verfahrensdaten und -parameter sowie alle notwendigen Steuersignale zwischen den verschiedenen Einheiten und der zentralen Rechen- und Steuereinheit 33 übermittelt. Die Rechen- und Steuereinheit ist in diesem Beispiel so ausgelegt, daß alle Abläufe, Bewegungen und Parameter eingegeben und Regelungen hinsichtlich Vorschub und Rotation sowie Überwachungsfunktionen ausgeführt werden können.

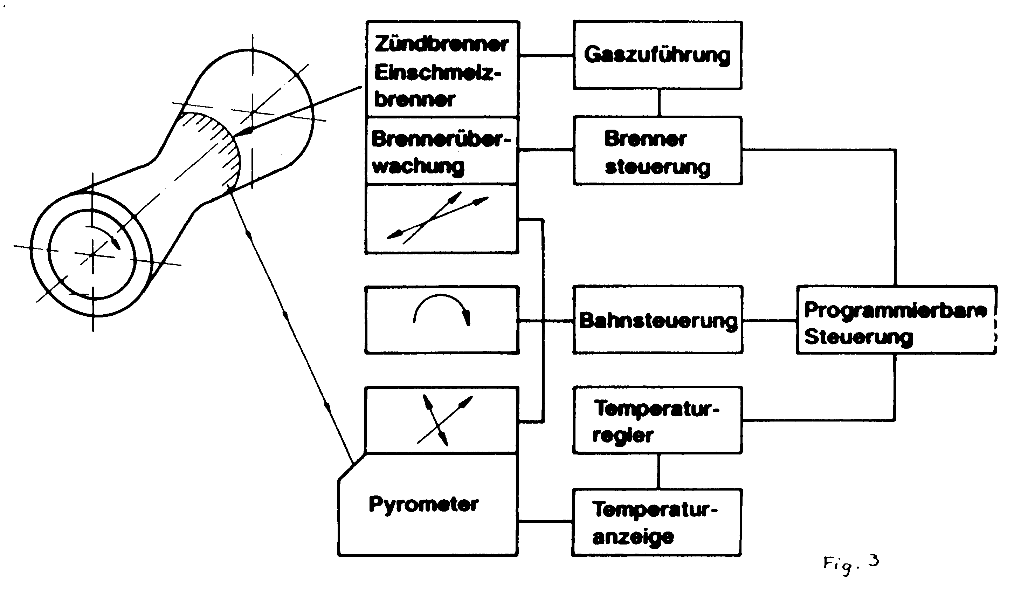

Figur 3 zeigt dazu eine schematische Darstellung der Verknüpfungen, die bei der jetzt zu beschreibenden Vorrichtung vorhanden sind.

Dabei müssen folgende Vorgaben für den erfindungsgemäßen Bewegungsablauf eingegeben werden:
- Startpunkt, Bewegungsbahn, Endpunkt
- Drehzahl für die Arbeitsspindel
- Parameter für die Vorschubregelung in Längsrichtung entsprechend dem Temperatursignal

Da Drehzahl, Positionierungen und Vorschubregelung werkstückabhängig sind, müssen diese vom Bedienungspersonal verändert werden können. Dies kann hinsichtlich des Bewegungsablauf im sogenannten Teach-in-Verfahren, also durch Durchfahren der vorgesehenen Bewegungsbahn mit Einspeicherung der wesentlichen Koordinatenpunkte, erfolgen oder auch über eine rein theoretische Ermittlung und anschließende Eingabe der Koordinaten durchgeführt werden. Bezüglich der Temperaturregelung des Vorschubs sind insbesondere die Parameter
- Solltemperatur
- untere und obere Grenztemperatur für Alarmmeldungen sowie
- die das Regelverhalten bestimmenden Größen einzuprogrammieren.

Mit Vorteil werden diese Angaben mit Hilfe eines menuegeführten Programms vom jeweiligen Bediener automatisch verlangt. Grundsätzlich ermöglicht die Vorrichtung folgende Betriebszustände:
a) Manuellen Betrieb
b) Teach-in-Eingabe von Koordinaten
c) Eingabe berechneter Koordinaten
d) Parametereingabe
e) Testlauf und
f) Automatikbetrieb entsprechend den aktuellen Daten.

Dazu im einzelnen:
Im Handbetrieb können Einzelfunktionen, wie beispielsweise das Einschalten des Brenners, das Drehen der Arbeitsspindel oder das Bewegen des Vorschubschlittens oder bestimmte Brennereinstellungen, betätigt werden. In Verbindung mit dieser manuellen Einstellbarkeit kann das Teach-in-Verfahren besonders vorteilhaft genutzt werden, weil damit die Erfahrungen vom manuellen Einschmelzen zur Programmierung des späteren Arbeitsablaufs eingesetzt werden können. Dies gilt bezüglich Drehzahl, Brennerabstand, Brennerposition, also der Brennerführungsbahn allgemein, und gegebenenfalls auch bezüglich der Schrägstellung des Brenners 20 und dem Abstand des Pyrometers 21. Andererseits ist ohne weiteres im allgemeinen Eingabestatus die Eingabe aller Daten auch per Zahleneingabe, beispielsweise mit Hilfe einer vorliegenden Zeichnung, möglich, womit eine Alternativmethode zum Teach-in-Verfahren gegeben ist. Im Testmodus kann dann zunächst ein Testlauf für einen Einschmelzvorgang ausgeführt werden, auf den, gegebenenfalls nach einigen Korrekturen, der reine Automatikbetrieb folgen kann.

Ein möglicher Produktionsablauf ergibt sich nun wie folgt:
- ein flammgespritztes Werkstück wird eingespannt
- die Drehbewegung wird gestartet
- der Brenner wird an einen Startpunkt herangeführt und bei Passieren desselben gezündet
- Brenner und Pyrometer werden an den Anfangspunkt für den Einschmelzvorgang gefahren
- die Oberflachentemperatur wird gemessen - auch bereits in der Aufheizphase - und bei Erreichen der Solltemperatur wird der Vorschub in Gang gesetzt
- der Vorschub wird erfindungsgemäß geregelt und läuft über den vorgegebenen Verfahrweg der Brennerspitze
- bei Erreichen der Endposition des Einschmelzvorgangs wird der Brenner vom Werkstück zurückgezogen und gegebenenfalls gelöscht
- abschließend wird der Brenner in die Startposition zurückgeführt, während vorher, zeitgleich oder danach das Werkstück manuell oder mittels einer Werkstückwechseleinrichtung ausgetauscht wird.

Hinsichtlich der Regelweise besteht, wie Figur 3 entnehmbar ist, eine Vernetzung der Einzelelemente der Vorrichtung in der Weise, daß das Pyrometer 21 ein Temperatursignal liefert, das der Steuereinheit 33 zugeführt wird, die wiederum aus diesem Wert die notwendigen Vorschubwerte ermittelt und diese auf dem programmierten Vorschubweg ausführt. Zusätzlich ist die Rechen- und Regeleinheit mit dem Zündbrenner, dem Einschmelzbrenner und der Brennerüberwachung verbunden, wodurch bei Abweichungen von vorgegebenen Werten unter Umständen eine Nachregelung dieser Elemente erfolgen oder auch ein Abbruch des Einschmelzvorgangs ausgelöst werden kann. Das erfindungsgemäße Verfahren sowie die zugehörigen Vorrichtungen ergeben eine Vielzahl von Ausführungsmöglichkeiten und Variationen in Details. Grundsätzlich sind relativ einfache Varianten der erfindungsgemäßen Verfahrensweise ebenso möglich wie die eben beschriebene, komplexe Vernetzung verschiedenster Funktionselemente mit der Zuleitung vieler Meßsignale zu einer zentralen Einheit und der Regelung verschiedener Elemente von dieser.

Zusammenfassend kann jedoch festgehalten werden, daß mit dem erfindungsgemäßen Vorschlag der Einschmelzvorgang für nicht zylinderförmige Werkstücke in verschiedenen Perfektionsstufen automatisiert ausgeführt werden kann. Es werden dabei bei sachkundiger Durchführung des vorgeschlagenen Verfahrens qualitativ gute Ergebnisse erzielt, wobei der automatische Ablauf mit großer Sicherheit und ohne ständige Betreuung durch entsprechendes Personal abläuft.

## Patentansprüche

1. Verfahren zum automatischen Einschmelzen einer thermisch gespritzten Oberfläche auf einem rotationssymmetrischen jedoch nicht zylinderischen Werkstück,
bei dem das Werkstück um die Achse seiner Rotationssymmetrie in Rotation versetzt wird
und bei dem auf dem Werkstück und auf dem Mantelflächenring, der gerade dem Einschmelzprozeß mit einem darauf gerichteten Einschmelzbrenner unterworfen ist, mit einer berührungslosen Sensorik die Temperatur oder die erhöhte Reflexionsfähigkeit (nasser Schein) als für den Einschmelzvorgang relevante Größe gemessen wird,
wobei ausgehend von diesem Meßwert eine Vorschubbewegung des Einschmelzbrenners auf einer Brennerführungsbahn geregelt ausgeführt wird,
dadurch gekennzeichnet,
daß eine - nicht rotationsachsenparallele - Brennerführungsbahn, die durch den Verfahrweg der Brennerspitze definiert ist, vorab hinsichtlich Startpunkt, Bahnverlauf und Endpunkt so festgelegt wird, daß sich eine abstandskonstante Nachführung des Brenners und der Brennerspitze hinsichtlich der nicht zylinderförmigen Werkstückoberfläche ergibt,
und diese Festlegung einer zentralen Rechen- und Steuereinheit eingegeben wird, welche - in Verbindung mit dem Signal der berührungslosen Sensorik - die Vorschubwerte zum Durchlaufen der festgelegten Brennerführungsbahn ermittelt und zur Ausführung bringt.

2. Verfahren nach Anspruch 1, dadurch gekennzeichnet, daß als für den Einschmelzvorgang relevante Größe im Einschmelzbereich die Temperatur mittels eines Pyrometers gemessen wird.

3. Verfahren nach Anspruch 1, dadurch gekennzeichnet, daß als für den Einschmelzvorgang relevante Größe die erhöhte Reflexionsfähigkeit des gerade bearbeiteten Oberflächengebiets, der sogenannte nasse Schein, mittels eines Reflexionslichtdetektors gemessen wird.

4. Verfahren nach Anspruch 2, dadurch gekennzeichnet, daß daß mit der Zieloptik des Pyrometers der Einschmelzbereich aus einem Abstand von größer 30 cm anvisiert wird, wobei das Pyrometer auf einen bezüglich des Einschmelzen geeigneten Temperaturbereich kalibriert ist.

5. Verfahren nach Anspruch 3, dadurch gekennzeichnet, daß der Reflexionslichtdetektor in senkrechter Einstellung über der zu messeneden Fläche angeordnet wird, woraus folgt, daß nach dem Reflexionsgesetz reflektiertes Licht in den Detektor zurückfällt, wodurch sich in Verbindung mit dem Aufkommen des nassen Scheins das Steuersignal zur Regelung des Vorschubs ergibt.

6. Verfahren nach Anspruch 3, dadurch gekennzeichnet, daß der Reflexionslichtdetektor etwas schräg über der zu messenden Fläche angeordnet wird, woraus folgt, daß zunächst - bei matter Oberfläche - diffus reflektiertes Licht in den Detektor zurückfällt, wobei dies bei Aufkommen des nassen Scheins abnimmt, wodurch sich das Steuersignal zur Regelung des Vorschubs ergibt.

7. Verfahren nach einem der Ansprüche 1 bis 7, dadurch gekennzeichnet, daß die Rotationsgeschwindigkeit in Abhängigkeit von der Werkstückform verändert wird und zwar so, daß eine gleichbleibende Überstreichgeschwindigkeit für jeden Werkstückteil erreicht wird.

8. Einschmelzvorrichtung für rotationssymmetrische Werkstücke zur Durchführung des Verfahrens nach einem der Ansprüche 1 bis 7 mit
- einer Einspannvorrichtung (11,14,15) für ein entsprechendes Werkstück, mit der dies in Rotation um seine rotationssymmetrische Achse versetzt werden kann
- einem Schlitten (18), der parallel zur Rotationsachse verschiebbar ist und auf dem sich ein Haltearm (19) befindet, an dem ein in Richtung Werkstückmantelfläche ausgerichteter Einschmelzbrenner (20) und eine ebenso ausgerichtete, berührungslose Sensorik zur Messung der Temperatur oder des Reflexionsvermögens (21) befestigt sind
- einem ansteuerbaren Antriebsmotor (25) für den Schlitten, mit dem der Schlitten mit bestimmten, zuführbaren Geschwindigkeitswerten verschoben werden kann,
- einer Rechen- und Steuereinheit (33), die mit der Sensorik, dem Einschmelzbrenner und dem Antriebsmotor für den Schlitten verbunden ist
dadurch gekennzeichnet, daß
entweder der Schlitten (18) auch quer zur Rotationsachsenrichtung verschiebbar ausgebildet ist oder der Einschmelzbrenner (20) in seiner Halteposition am Haltearm (19) vorwärts und rückwärts verschiebbar ist,
wobei mit dem so gewonnenen, zusätzlichen Bewegungsfreiheitsgrad des Brenners die Nachführbarkeit desselben bezüglich der Werkstückoberfläche bei nicht zylinderförmigen Werkstücken hergestellt wird.

9. Vorrichtung nach Anspruch 8, dadurch gekennzeichnet, daß im Bereich unterhalb und seitlich des eingespannten Werkstücks Abschirmflächen gegen Hitze angeordnet sind.

## Claims

1. Method for automatic melting of a thermally sprayed surface on a rotationally symmetrical but non-cylindrical workpiece, in which the workpiece is set in rotation about its rotational symmetry axis and in which on the workpiece and on the surface ring just subjected to the melting process with a melting burner aimed at it, the temperature or the increased reflecting ability (wet sheen) is measured as a variable of relevance to the melting operation with a contact-free sensor system, a feed movement of the melting burner on a burner guide path being executed controlled starting from this measurement, characterised in that a burner guide path - not parallel with the axis of rotation - defined by the movement of the burner tip, is first determined as regards the starting point, routing and ending point so that the burner and the burner tip are guided at a constant distance in relation to the non-cylindrical workpiece surface, and this determination is fed into a central calculating and control unit which - in conjunction with the signal of the contact-free sensor system - calculates and executes the feed values to follow the determined burner guide path.

2. Method according to claim 1, characterised in that as a variable of relevance to the melting operation the temperature in the melting area is measured by means of a pyrometer.

3. Method according to claim 1, characterised in that as a variable of relevance to the melting operation the increased reflecting ability of the surface area just melted, the so-called wet sheen, is measured by means of a reflected light detector.

4. Method according to claim 2, characterised in that the melting area is targeted with the sighting optics of the pyrometer from a distance of more than 30 cm, the pyrometer being calibrated to a temperature range suitable for the melting operation.

5. Method according to claim 3, characterised in that the reflected light detector is disposed in a vertical attitude above the surface to be measured, from which it follows that according to the law of reflection reflected light falls back into the detector through which the control signal is produced to regulate the feed in conjunction with the development of the wet sheen.

6. Method according to claim 3, characterised in that the reflected light detector is disposed roughly at an oblique angle over the surface to be measured, from which it follows that initially - when the surface is matt - diffusely reflected light falls back into the detector, this decreasing as the wet sheen develops, through which the control signal is produced to regulate the feed.

7. Method according to one of claims 1 to 7, characterised in that the speed of rotation is altered according to the shape of the workpiece so that a constant scanning speed is obtained for each part of the workpiece.

8. Melting device for rotationally symmetrical workpieces for implementation of the method according to one of claims 1 to 7 with
- a clamping device (11, 14, 15) for a corresponding workpiece, with which this can be set in rotation about its rotational symmetry axis,
- a sliding carrier (18) which can be moved parallel with the axis of rotation and on which is located a supporting arm (19) to which are secured a melting burner (20) directed towards the surface of the workpiece and a contact-free sensor system directed in the same way for measurement of the temperature or the reflecting capacity (21),
- an actuatable driving motor (25) for the sliding carrier with which the sliding carrier can be moved at certain speeds which can be supplied,
- a calculating and control unit (33) which is connected with the sensor system, the melting burner and the driving motor for the sliding carrier,
characterised in that either the sliding carrier (18) is embodied so that it can be moved at right-angles to the direction of the axis of rotation or the melting burner (20) can be moved forwards and backwards in its position on the supporting arm (19), the controllability of the burner in relation to the workpiece surface in the case of non-cylindrical workpieces being produced with the additional degree of freedom of movement thus obtained for it.

9. Device according to claim 8, characterised in that heat shielding surfaces are disposed in the area under and to the sides of the clamped workpiece.

## Revendications

1. Procédé pour le traitement automatique par fusion d'une surface obtenue par pulvérisation thermique sur une pièce à traiter présentant une symétrie de rotation tout en n'étant pas cylindrique, dans lequel on déplace la pièce à traiter autour de son axe de symétrie de rotation et dans lequel on mesure à l'aide d'un capteur sans contact la température ou l'augmentation de pouvoir réflecteur (apparence humide) en tant que grandeur pertinente pour le processus de fusion sur la pièce à traiter et sur la bague de surface d'enveloppe qui est soumise dès le processus de fusion à l'action d'un brûleur de fusion dirigé sur elle, un mouvement d'avance du brûleur de fusion étant réalisé, à partir de cette valeur de mesure, de façon réglée sur une trajectoire de guidage du brûleur, caractérisé en ce que l'on fixe une trajectoire de guidage du brûleur non parallèle à l'axe de rotation et qui est définie par le trajet de déplacement de l'extrémité du brûleur, essentiellement en ce qui concerne le point de départ, l'allure du parcours et le point d'extrémité, de telle sorte que l'on obtienne un suivi du guidage du brûleur et de l'extrémité du brûleur à distance constante par rapport à la surface de forme non cylindrique de la pièce à traiter et en ce que cette détermination est transmise à une unité centrale de calcul et de commande qui détermine - en liaison avec le signal du capteur de température sans contact - les valeurs d'avance pour réaliser la trajectoire de guidage du brûleur fixée.

2. Procédé selon la revendication 1, caractérisé en ce qu'on mesure la température dans la zone de fusion en tant que grandeur pertinente pour le processus de fusion, à l'aide d'un pyromètre.

3. Procédé selon la revendication 1, caractérisé en ce qu'on mesure, comme grandeur pertinente pour le processus de fusion, l'augmentation du pouvoir réfléchissant de la partie de la surface qui vient d'être traitée, ce que l'on appelle l'apparence humide, à l'aide d'un capteur de lumière réfléchie.

4. Procédé selon la revendication 2, caractérisé en ce que l'on vise la zone de fusion, à une distance supérieure à 30 cm, avec l'optique de visée du pyromètre, qui est étalonnée sur une plage de température adéquate en rapport avec la fusion.

5. Procédé selon la revendication 3, caractérisé en ce que le capteur de lumière réfléchie est disposé en position perpendiculaire au-dessus de la surface à mesurer, de telle manière que, d'après la loi de la réflexion, la lumière réfléchie revienne sur le capteur, et qu'en liaison avec l'arrivée de l'apparence humide on obtienne le signal de commande pour le réglage de l'avance.

6. Procédé selon la revendication 3, caractérisé en ce que le capteur de lumière réfléchie est disposé quelque peu obliquement au dessus de la surface à mesurer, de telle manière que, d'abord - avec une surface humide - la lumière diffuse réfléchie revienne sur le capteur et diminue à l'arrivée de l'apparence humide, et que l'on obtienne le signal de commande pour le réglage de l'avance.

7. Procédé selon l'une des revendications 1 à 6, caractérisé en ce qu'on modifie la vitesse de rotation en fonction de la forme de la pièce à traiter, et en fait de telle sorte que l'on obtienne une vitesse de revêtement superficielle constante pour chaque partie de la pièce à traiter.

8. Dispositif de traitement par fusion pour des pièces à traiter présentant une symétrie de rotation pour la mise en oeuvre du procédé selon l'une des revendications 1 à 7, muni:
- d'une installation de serrage (11, 14, 15) pour une pièce à traiter correspondante et avec laquelle cette pièce peut être déplacée en rotation autour de son axe de rotation,
- d'un chariot (18) qui est susceptible de coulisser parallèlement à l'axe de rotation et sur lequel se trouve un bras de support (19) auquel sont fixés un brûleur (20) de revêtement par fusion dirigé dans la direction de la surface d'enveloppe de la pièce à traiter et un capteur sans contact, orienté de la même manière pour mesurer la température ou le pouvoir réflecteur (21),
- un moteur d'entraînement (25) susceptible d'être commandé, pour le chariot et à l'aide duquel le chariot peut être déplacé en coulissant à des valeurs de vitesses déterminées et réglables en permanence,
- une unité (33) de calcul et de commande qui est reliée au capteur, au brûleur de revêtement par fusion et au moteur d'entraînement pour le chariot,
caractérisé en ce que, soit le chariot (18) est réalisé coulissant pour qu'il puisse également se déplacer transversalement à la direction de l'axe de rotation, soit le brûleur de traitement par fusion (20) est réalisé, dans sa position de support sur le bras de support, coulissant vers l'avant et vers l'arrière, de telle façon que grâce au degré de liberté de déplacement supplémentaire du brûleur, on obtienne le suivi du guidage au brûleur par rapport à la surface de la pièce à traiter pour les pièces dont la forme n'est pas cylindrique.

9. Dispositif selon la revendication 8, caractérisé en ce que dans la zone située en dessous et latéralement par rapport à la pièce à traiter fixée par serrage, sont disposées des surfaces de protection contre la chaleur.
